Europäisches Patentamt

**European Patent Office**

**Office européen des brevets**

(11) Numéro de publication: **0 076 218**
**A1**

(12) # DEMANDE DE BREVET EUROPEEN

(21) Numéro de dépôt: **82401772.7**

(22) Date de dépôt: **29.09.82**

(51) Int. Cl.³: **B 60 J 7/16**
**B 60 J 7/18**

(30) Priorité: **30.09.81 FR 8118419**

(43) Date de publication de la demande:
**06.04.83 Bulletin 83/14**

(84) Etats contractants désignés:
**AT BE CH DE GB IT LI LU NL SE**

(71) Demandeur: **Etablissements FARNIER ET PENIN**
**11-13, rue J.B. Charcot**
**F-92400 Courbevoie (Hauts-de-Seine)(FR)**

(72) Inventeur: **Bichon, Jacky**
**2, allée du Camp Romain**
**F-79300 Bressuire Deux-Sèvres(FR)**

(72) Inventeur: **Neaux, Jean-Claude**
**Le Chemin du Pas Bodin Terves**
**F-79300 Bressuire (Deux Sèvres)(FR)**

(74) Mandataire: **Chevallier, Robert**
**Cabinet BOETTCHER 23, rue La Boétie**
**F-75008 Paris(FR)**

(54) **Toit ouvrant pouvant recevoir un store pare-soleil pour véhicule automobile.**

(57) Toit ouvrant pouvant recevoir un store pare-soleil pour véhicule automobile.

Un cadre (2) ayant une aile extérieure (7) et une aile intérieure (8) est appliqué par un contre-cadre (3) contre une tôle (1) et il supporte un joint (12) contre lequel deux charnières (16) maintiennent un panneau (15) tandis qu'un mécanisme à genouillère (17) sert à tenir le panneau (15) fermé et appuyé contre le joint (12) ou entrebaillé.

Fig.1

Toit ouvrant pouvant recevoir un store pare-soleil pour véhicule automobile.

L'invention a pour objet un toit ouvrant pour véhicule automobile, plus précisément un panneau accompagné d'un encadrement, de charnières et d'un mécanisme de fermeture étanche et d'entrebaillement, l'ensemble étant conçu pour être monté sans grande difficulté dans une ouverture appropriée ménagée dans le pavillon d'une automobile de tourisme ou d'une cabine d'un camion.

On connaît déjà divers types de toits ouvrants dont sont pourvus principalement les véhicules du type berline ou les autocars. Tous ces toits ouvrants connus sont d'une conception telle qu'ils doivent être incorporés dès l'origine par le constructeur à la toiture de la carrosserie du véhicule. Il est pratiquement impossible de munir d'un toit ouvrant une automobile qui n'a pas été équipée ainsi dès sa construction.

Le but principal de l'invention est d'apporter un toit ouvrant tel qu'il puisse être installé dans la toiture d'un véhicule à tout moment de l'existence de ce dernier, ce même toit ouvrant pouvant aussi, bien entendu, être monté sur un véhicule pendant la fabrication de celui-ci.

Un autre but de l'invention est de pouvoir combiner à ce toit un store pare-soleil utilisable dans toutes les positions.

Un toit ouvrant conforme à l'invention comprend un encadrement destiné à être monté dans une ouverture découpée dans la tôle du pavillon d'un véhicule et à être fixé à cette tôle, un joint souple d'étanchéité supporté par l'encadrement, un panneau de fermeture se plaçant à l'intérieur de l'encadrement contre le joint d'étanchéité, deux charnières espacées se fixant chacune au panneau par un premier élément et à l'encadrement par un second élément ; un mécanisme de fermeture et d'entrebaillement comprenant deux chapes espacées se fixant au panneau, un organe de manoeuvre articulé sur ces deux chapes de panneau, une chape de cadre se fixant à l'encadrement, une biellette articulée par une première extrémité sur l'organe de manoeuvre et articulée par une seconde extrémité sur la chape de cadre.

L'encadrement comprend un cadre rectangulaire constitué par un profilé ayant en section droite un profil qui présente une partie centrale ayant en position d'utilisation une extrémité supérieure à partir de laquelle s'étend une aile extérieure horizontale et une extrémité inférieure à partir de laquelle s'étend une aile intérieure horizontale, cette partie centrale présentant à l'opposé de l'aile extérieure une rainure de réception de vis. L'encadrement comprend aussi un contre-cadre constitué par un profilé en L destiné à être tenu en position d'opposition au cadre par des vis vissées dans la rainure de réception prévue sur le cadre.

La partie centrale et l'aile intérieure du cadre servent à la mise en place et à la retenue d'un joint souple d'étanchéité constitué par un profilé en élastomère ayant une face plane périmétrique parallèle à l'aile intérieure et destinée à servir de face d'appui pour le panneau de fermeture.

Dans chaque charnière le second élément se fixant à l'encadrement présente une plage d'appui située entre deux ailettes; le premier élément a une base avec une face de montage traversée par un trou pour sa fixation au panneau et avec deux oreilles espacées situées à l'opposé de la face de montage; un levier est articulé entre les deux oreilles par une première partie extrême pourvue d'une came d'extrémité et la seconde partie extrême de ce levier est munie d'une palette de manoeuvre; en position d'utilisation le levier est repoussé entre les oreilles, la came est appliquée contre la plage d'appui du premier élément et elle comprime le joint entre le panneau et l'aile extérieure du cadre.

Le levier est percé d'un trou longitudinal contenant un ressort de rappel; une ouverture allongée traverse ce levier et le trou longitudinal et, en position de fermeture, il est prolongé à travers les oreilles; cette ouverture contient une tige de verrouillage transversale saillante et accessible extérieurement qui reçoit la poussée du ressort. L'ouverture est allongée en sens longitudinal et comprend une zone de verrouillage dans laquelle la tige de verrouillage est poussée par le ressort et une zone de déverrouillage où la tige est mise quand le ressort est comprimé. Les oreilles présentent une échancrure ouverte sur l'extérieur en regard de la zone de déverrouillage de l'ouverture transversale allongée.

De préférence, les oreilles s'étendent à partir de la base en étant espacées du panneau pour laisser passer un étrier allongé qui s'étend à travers les charnières et qui contient entre ses extrémités libres un store déroulable. Il est avantageux que l'étrier présente un décrochement grâce auquel il passe sous les extrémités saillantes des tiges de verrouillage. Un bord longitudinal de l'organe de manoeuvre reste accessible en toutes positions et sert à recevoir une patte d'accrochage du store déroulé.

Selon un mode de réalisation de l'invention, l'organe de manoeuvre du mécanisme est creux et la biellette est enveloppée et contenue par l'organe de manoeuvre en position de fermeture du toit. L'organe de manoeuvre est articulé par une extrémité avec une extrémité de la biellette et il est articulé par son extrémité opposée avec deux chapes de panneau tandis que l'autre extrémité de la biellette est articulée avec une chape de cadre; l'ensemble du mécanisme se comporte comme une genouillère à la fermeture du panneau et en position d'entrebaillement de ce dernier.

Pour mieux faire comprendre l'invention, on donnera maintenant, sans intention limitative, une description d'un exemple de réalisation. On se reportera aux dessins annexés dans lesquels :

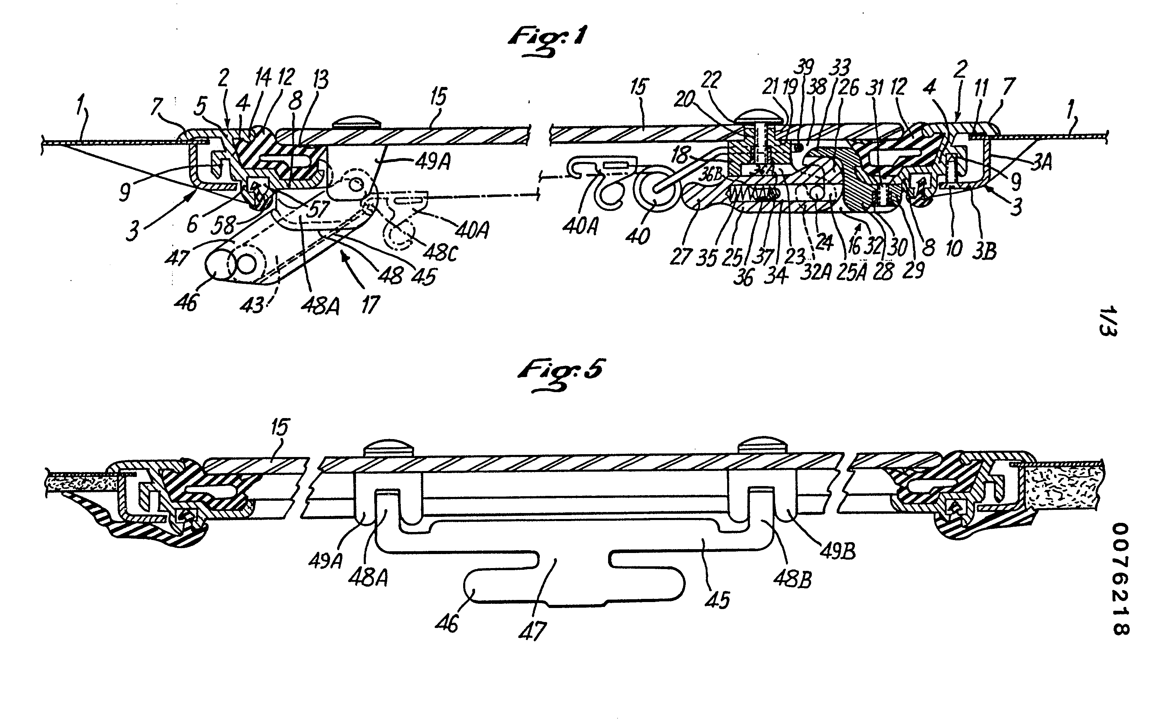

- la figure 1 est une vue en coupe brisée par un plan transversal passant par le mécanisme de fermeture et d'entrebaillement et par une charnière d'un toit ouvrant conforme à l'invention installé sur un véhicule, représenté à l'état fermé avec un store représenté en trait plein à l'état fermé et en trait mixte à l'état ouvert ,

- la figure 2 est une vue de dessous du toit de la figure 1 ,

- la figure 3 est une vue en coupe selon III-III de la figure 2 du premier élément d'une charnière du même toit ouvrant ,

- la figure 4 est une vue de côté du mécanisme de fermeture et d'entrebaillement du toit ouvrant de la figure 1, en position d'ouverture ,

- la figure 5 est une vue en coupe selon V-V de la fig.2,

- la figure 6 est une vue en coupe selon VI-VI de la figure 2.

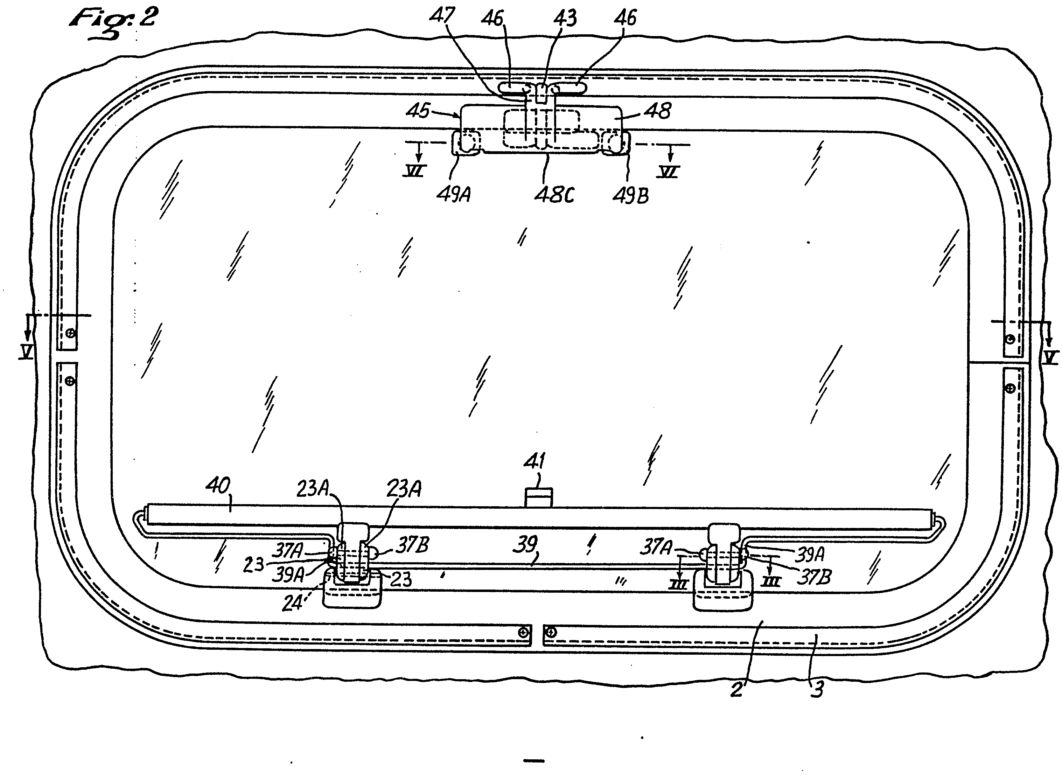

La tôle 1 du toit de la carrosserie d'un véhicule automobile a été découpée pour faire apparaître une ouverture appropriée dans laquelle est monté et fixé un encadrement comprenant un cadre 2 et un contre-cadre 3. Le cadre 2 est réalisé à partir d'un profilé en alliage léger refermé sur lui-même en rectangle avec des angles largement arrondis comme on peut le voir sur la figure 2. Ce cadre 2 a en section droite un profil ayant une partie centrale 4 avec une extrémité supérieure 5 et une extrémité inférieure 6. A partir de l'extrémité supérieure 5, une aile extérieure 7 s'étend vers l'extérieur du cadre, horizontalement en position d'utilisation, et une aile intérieure 8 s'étend à partir de l'extrémité inférieure 6 vers l'intérieur du cadre 2. La partie centrale 4 présente à son extrémité inférieure 6 une rainure 9 qui s'ouvre vers le bas à l'opposé de l'aile extérieure 7 et qui est apte à permettre le vissage de vis 10. L'aile extérieure 7 est destinée à être appliquée contre la face supérieure de la tôle 1 autour de l'ouverture. Le contre-cadre 3 est constitué par un profilé en L ayant une première branche 3A destinée à être appliquée par sa face extrême contre la face inférieure de la tôle 1, à l'opposé de l'aile extérieure 7. Le profilé en L a une seconde branche 3B qui est destinée à couvrir la rainure 9 et à être tenue en place par des vis 10 vissées dans cette rainure. Un joint 11 peut être placé et comprimé entre l'aile extérieure 7 et la tôle 1. Ainsi, l'encadrement est fixé solidement et de façon étanche à la tôle 1 dans l'ouverture pratiquée dans celle-ci.

La partie centrale 4 et l'aile intérieure 8 servent à la mise en place et à la retenue à sa position d'utilisation d'un joint 12 en élastomère qui présente une face plane 13 parallèle à l'aile intérieure 8 et qui se trouve sensiblement au même niveau que la tôle 1. Le joint 12

.5

est collé à la partie centrale 4 et à l'aile intérieure 8.
Si on le juge utile, le profilé qui constitue le cadre 2
peut comprendre, en sens opposé à l'aile extérieure 7, un
talon périmétrique intérieur·14 sous lequel le joint 12
peut être engagé et retenu.

Un panneau 15 en matière convenable, par
exemple en verre de sécurité; coloré en teinte sombre, est
découpé aux dimensions voulues pour s'appliquer sur la
totalité de la face annulaire 13 du joint 12. Ce panneau 15
est associé à deux charnières 16 et à un mécanisme 17 de
fermeture et d'entrebaillement.

Chaque charnière 16 comprend un premier élément qui présente une base 18 avec une face de montage 19,
traversée par un trou 20 pour sa fixation au panneau 15, par
exemple à l'aide d'un boulon de montage qui passe à travers
un trou 21 prévu dans le panneau 15, un joint approprié 22
étant placé sous la tête du boulon. A son extrémité opposée
à la face de montage 19, la base 18 a deux oreilles espacées
23 qui ont chacune un prolongement 23A en dehors de la base.
Un axe 24 supporté transversalement par les oreilles 23 sert
à l'articulation d'un levier 25 qui est pourvu à une première
partie extrême 25A d'une came d'extrémité 26. A sa seconde
partie extrême, le levier se termine par une palette de
manoeuvre 27. En position de fermeture, le levier 25 est
repoussé entre les oreilles 23 et la came 26 appuie fortement
sur un second élément de charnière 28. Ce dernier comprend un
corps 29 à profil en équerre qui couvre l'aile intérieure 8
et qui est percé de trous 30 destinés à recevoir des vis 31
qui le fixent à cette aile intérieure 8. Le second élément 28
présente sur le côté du corps 29 opposé au cadre 2 deux
ailettes espacées 32 qui sont réunies du côté du panneau 15
par une plage d'appui 33. C'est sur ladite plage 33 que
s'applique fortement la came 26 en provoquant la compression
du joint 12 contre le panneau 15.

Comme la came 26 est située au-delà de l'axe 24
par rapport à la palette de manoeuvre 27, l'effet élastique
du joint 12 tend à tenir le levier 25 en état de fermeture.

Les ailettes 32 se terminent sur leur côté opposé à la plage 33 par des crochets 32A qui s'ouvrent vers cette dernière. L'axe 24 est engagé dans ces crochets quand on rabat le levier 25 en position de fermeture entre les oreilles 23. Quand on met ce levier 25 en position d'ouverture, il devient possible de dégager l'axe 24 des crochets 32A et de retirer le panneau 15 du cadre 2.

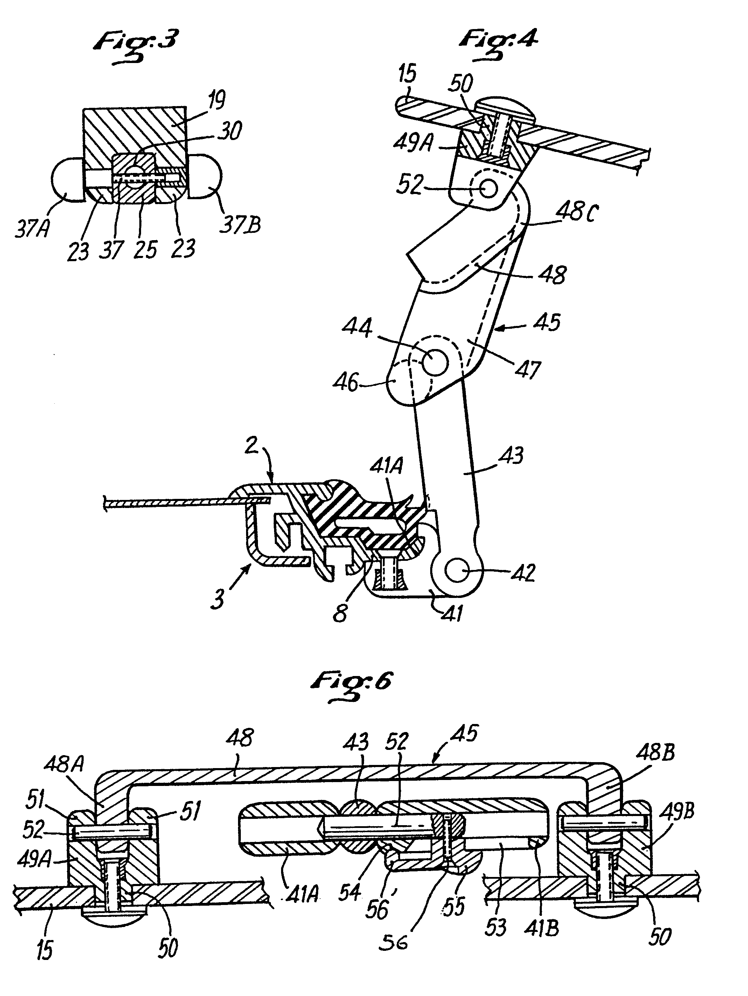

Le levier 25 est percé d'un trou borgne longitudinal 34 à partir de son extrémité où se trouve la came 26. Ce trou 34 contient un ressort 35; en plus il est traversé par une ouverture 36 allongée dans le sens de la longueur du levier 25 et destinée à contenir une tige transversale 37 de verrouillage. En position de fermeture du levier 25, l'ouverture 36 est prolongée à travers les oreilles 23. En pratique, la tige 37 est composée de deux parties en prolongement qui s'assemblent par un emmanchement à force (fig. 3). En outre, cette tige 37 a deux parties extrêmes 37A, 37B, saillantes et accessibles extérieurement pour permettre sa manoeuvre dans l'ouverture allongée 36 contre l'action du ressort 35 qui repousse cette tige 37 en s'appuyant contre le fond du trou borgne 34. Cette tige 37 se trouve alors dans une zone 36A de l'ouverture allongée 36 dite zone de verrouillage parce qu'il est impossible, dans cette position, de manoeuvrer le levier 25. A son extrémité opposée, l'ouverture allongée a une zone de déverrouillage 36B en face de laquelle il existe dans les oreilles 23 une échancrure ouverte latéralement sur l'extérieur (non visible sur les dessins) qui laisse passer la tige 37 pour permettre la manoeuvre du levier 25 quand cette tige a été repoussée contre l'action du ressort 35 jusqu'à la zone de déverrouillage 36B. Il est facile, à ce moment, d'ouvrir les charnières 16 et de retirer le panneau 15.

De plus, les charnières de l'invention sont conçues de telle sorte qu'il existe, après montage sur le panneau 15, un intervalle 38 entre ce dernier et les oreilles 23. Cet intervalle 38 est ménagé volontairement et il a une importance suffisante pour laisser passer et pour retenir en place un étrier 39 allongé, qui s'étend à travers les deux charnières 16 et au-delà de celles-ci, sur une longueur presque égale à celle du panneau 15, comme le montre la fig.2.

Cet étrier 39 tient entre ses branches un cylindre d'enroulement d'un store 40 qui est muni en son milieu d'une patte d'attache 40A. Afin qu'il soit bien tenu en place, l'étrier 39 a un resserrement en 39A à l'extérieur de chaque charnière 16 afin de passer sous la partie extrême 37A saillante extérieurement de chaque tige 37. Ainsi l'étrier ne peut pas pivoter vers le bas sous l'effet de son poids et le store 40 reste placé contre le panneau 15.

Le mécanisme 17 de fermeture et d'entrebaillement est monté sur le panneau 15 à l'opposé des charnières 16 et en face du milieu de la distance qui sépare ces dernières.

Ce mécanisme comprend une chape de cadre 41 qui est fixée à l'aide de vis à l'aile intérieure 8 du cadre 2. La face d'appui 41A de cette chape épouse le profil et s'applique aussi sur la tranche de l'aile 8.

La chape 41 contient avec une possibilité de pivotement autour d'un axe 42 une première extrémité d'une biellette 43 dont la seconde extrémité est articulée autour d'un axe 44 supporté à l'intérieur d'une poignée 45. Celle-ci comprend deux branches opposées 46 de préhension qui sont espacées par une fente pour permettre la mise en place et le pivotement de la biellette 43. Une partie de liaison 47 à profil en T raccorde les branches 46 à une demi-coquille 48 allongée qui est limitée à ses extrémités longitudinales par deux joues extrêmes 48A, 48B. Chacune de ces dernières est engagée dans une chape de panneau respectivement 49A, 49B. Chaque chape de panneau a une base avec un bossage central 50 prévu pour s'ajuster dans un trou correspondant percé dans le panneau 15 et pour recevoir une vis de montage. Les deux ailes 51 de chaque chape 49A, 49B sont traversées par un axe 52 d'articulation de la demi-coquille 48.

En position de fermeture du panneau 15, la demi-coquille 48 recouvre partiellement les chapes 49A, 49B et contient en partie la biellette 43, comme on peut le voir sur la figure 2. Son bord longitudinal 48C opposé à la partie de liaison 47 est alors accessible entre les chapes 49A, 49B.

En position d'ouverture du panneau 15, la biellette 43 est totalement déployée en dehors de la poignée 45,

0076218

comme le montre la figure 4. La demi-coquille 48 a une position pendante oblique mais son bord 48C reste accessible entre les chapes 49A, 49B.

Dans les deux positions du panneau 15, le bord 48C sert à l'accrochage de la patte d'attache 40A du store 40 quand celui-ci est déroulé.

Les axes d'articulation 42, 44, 52 sont disposés pour que le mécanisme constitue une genouillère ayant une ligne neutre qui est franchie dans une position intermédiaire du mécanisme. Pendant le mouvement de fermeture, il se produit une compression progressive du joint 12 par le panneau 15 qui atteint sa valeur maximum quand les axes 42, 44, 52 sont en alignement. Dès que la biellette 43 a franchi cette position, le joint 12 comprimé tend à maintenir le mécanisme en état de fermeture. En position d'ouverture, après franchissement de la ligne neutre, le mécanisme tend à se refermer en sens inverse sous le poids du panneau 15 mais la biellette 43 bute alors contre le fond de la fente dans laquelle elle est contenue entre les branches 46 de préhension.

Pour que l'on puisse assembler ou démonter facilement le mécanisme décrit ci-dessus et le panneau 15, la chape de cadre 41 est conformée comme le montre la fig. 6 dans la place qui reste disponible sous la demi-coquille 48 quand l'ensemble est en position de fermeture. Les deux ailes 41A, 41B de cette chape 41 sont assez larges pour permettre un coulissement de l'axe 52 dans son sens longitudinal. Une aile 41B a une ouverture longitudinale 53 qui est suivie du côté de la biellette 43 d'une encoche d'accrochage 54. Un élément coulissant 55 est engagé partiellement dans l'ouverture longitudinale 53 et il est fixé par une vis 56 à l'axe 52. A son extrémité proche de la biellette 43, cet élément 55 est pourvu d'une languette élastique 56' apte à pénétrer dans l'encoche d'accrochage 54. En libérant la languette 56' de l'encoche 54, on peut faire glisser l'élément 55 et l'axe 52 et faire sortir ce dernier de la biellette 43.

Le profilé du cadre 2 peut présenter d'autres rainures, comme la rainure 57 sous l'aile intérieure 8; leur rôle est de permettre la mise en place d'une baguette ou d'un jonc 58 qui sert à tenir un tissu décoratif ou qui constitue en soi un élément décoratif.

## REVENDICATIONS

1. Toit ouvrant destiné à être monté dans une ouverture découpée dans une tôle d'une carrosserie de véhicule automobile, comprenant un encadrement, un joint souple (12) disposé dans cet encadrement, un panneau (15) s'appliquant contre ce joint (12), au moins deux charnières (16) et un mécanisme de fermeture et d'entrebaillement (17), chaque charnière (16) ayant un premier élément (18) fixé au panneau (15), caractérisé en ce que chaque charnière (16) a un second élément (28) s'appliquant fermement contre l'encadrement ou contre une pièce fixée à ce dernier et provoquant une compression du joint (12).

2. Toit ouvrant selon la revendication 1 caractérisé en ce que l'encadrement est composé d'une part d'un cadre (2) constitué par un profilé présentant une partie centrale (4) ayant une extrémité supérieure à partir de laquelle s'étend une aile extérieure horizontale (7) et une extrémité inférieure à partir de laquelle s'étend une aile intérieure horizontale (8), ladite partie centrale présentant une rainure (9) ouverte à l'opposé de l'aile extérieure (7), d'autre part d'un contre-cadre (3) constitué par un profilé en L ayant une branche (3A) s'opposant à l'aile extérieure (7) et une branche (3B) se fixant par des vis (10) vissées dans la rainure (9), la partie centrale (4) et l'aile intérieure (8) servant d'appui au joint (12).

3. Toit ouvrant selon la revendication 2 caractérisé en ce que le premier élément (18) de chaque charnière (16) a une base (18) fixée au panneau (15) et deux oreilles espacées (23) pour l'articulation d'un levier (25) ayant une came d'extrémité (26) qui s'applique contre une face inférieure de l'aile intérieure (8) du cadre (2) ou une face d'une pièce fixée à cette aile pour provoquer la compression du joint (12).

4. Toit selon la revendication 3 caractérisé en ce que chaque charnière (16) comprend un second élément (28) fixé à l'aile intérieure (8) du cadre (2) et ayant une plage d'appui (33) contre laquelle s'applique la came (26).

5. Toit selon la revendication 3 caractérisé en ce que le levier (25) est contenu entre les oreilles (23) en position de fermeture et il présente un trou borgne longitudinal (34) contenant un ressort (35) et traversé par une ouverture transversale (36) dans laquelle est engagée une tige de verrouillage (37) poussée par le ressort (35) et ayant des extrémités saillantes accessibles extérieurement, ladite ouverture transversale (36) se prolonge à travers les oreilles (23) en position de fermeture du levier (25) et quand la tige (37) est poussée par le ressort (35) elle verrouille le levier (25) tandis que lorsqu'elle est poussée dans l'ouverture (36) contre l'action du ressort (35), elle se trouve en face d'une échancrure ouverte latéralement ménagée dans les oreilles (23) et autorisant le pivotement du levier (25).

6. Toit selon la revendication 4 caractérisé en ce que le second élément (28) de chaque charnière (16) comprend deux ailettes (32) qui sont réunies par la plage (33) du côté du panneau (15) et qui se terminent sur leur côté opposé à la plage (33) par des crochets (32A) ouverts vers cette dernière et dans lesquels est engagé l'axe (24) de pivotement du levier (25) quand celui-ci est en position de fermeture.

7. Toit selon la revendication 3 caractérisé en ce que les charnières (16) limitent avec le panneau (15) en dessous des oreilles (23) un intervalle (38) et un étrier allongé (39) supportant un store (40) passe dans les intervalles (38) et présente un resserrement (39A) à l'extérieur de chaque charnière (16) de façon à passer sous la partie extrême (37A) saillante extérieurement de chaque tige (37).

8. Toit selon la revendication 2 caractérisé en ce que le mécanisme de fermeture et d'entrebaillement (17) comprend une chape de cadre (41) destinée à être fixée à l'aile intérieure (8) du cadre (2), une biellette (43) articulée par un axe (42) sur cette chape (41), une poignée (45) ayant deux branches opposées (46) de préhension séparées par une fente dans laquelle est engagée et articulée la biellette (43), cette poignée (45) étant réunie à une demi-coquille allongée (48) limitée par deux joues extrêmes (48A, 48B), deux chapes de panneau (49A, 49B) ayant chacune deux ailes (51) supportant un axe (52) autour duquel sont articulées les joues extrêmes (49A, 49B).

9. Toit selon la revendication 8 caractérisé en ce que la demi-coquille (48) a un bord longitudinal (48C) opposé au côté où se trouvent les branches de préhension (46) et ce bord (48C) reste accessible entre les chapes (49A, 49B) dans les positions d'ouverture et de fermeture du panneau (15) pour servir de moyen d'accrochage.

10. Toit selon la revendication 8 caractérisé en ce que les ailes (41A, 41B) de la chape de cadre (41) sont élargies pour permettre le coulissement en sens longitudinal de l'axe (42), une aile (41B) ayant une ouverture longitudinale (53) suivie d'une encoche d'accrochage (54) tandis qu'un élément coulissant (55) engagé partiellement dans cette ouverture (53) et fixé à l'axe (52) comprend une languette élastique (56') apte à pénétrer dans l'encoche d'accrochage (54).

0076218

Fig.1

Fig.5

Fig.2

*Fig.3*

*Fig.4*

*Fig.6*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 60 J    7/16 |
| X | DE-A-2 508 487  (FORD) *Voir en particulier la figure 2* | 1,3 | B 60 J    7/18 |
| | --- | | |
| X | GB-A-1 597 601  (EMPIRE AUTOMOTIVE) *En entier* | 1-4 | |
| | --- | | |
| X | GB-A-1 597 602  (EMPIRE AUTOMATIVE) *En entier* | 1-4 | |
| | --- | | |
| X | GB-A-1 597 603  (EMPIRE AUTOMATIVE) *En entier* | 1-4 | |
| | --- | | |
| X | DE-A-2 901 526  (EMPIRE AUTOMATIVE) *Voir en particulier page 14, alinéa 2* | 1-4 | **DOMAINES TECHNIQUES RECHERCHES (Int. Cl. ³)** |
| | --- | | B 60 J |
| A | GB-A-2 044 188  (NISSAN) *Voir en particulier la figure 5* | 1 | |
| | --- | | |
| A | DE-A-2 351 270  (WEBASTO) | 1 | |
| | --- | | |
| A | GB-A-1 551 677  (LEE MANNING) | 1 | |
| | --- | | |
| A | GB-A-1 585 140  (WIDNEY et al.) | 1 | |
| | ---              -/- | | |

Le présent rapport de recherche a été établi pour toutes les revendications

| Lieu de la recherche | Date d'achèvement de la recherche | Examinateur |
|---|---|---|
| LA HAYE | 08-12-1982 | SCHMAL R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82

Office européen
des brevets

**RAPPORT DE RECHERCHE EUROPEENNE**

0076218
Numéro de la demande

EP 82 40 1772

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 347 223 (WEBASTO) | 1 | |
| | ----- | | |

DOMAINES TECHNIQUES RECHERCHES (Int. Cl. ³)

Le présent rapport de recherche a été établi pour toutes les revendications

| Lieu de la recherche | Date d'achèvement de la recherche | Examinateur |
|---|---|---|
| LA HAYE | 08-12-1982 | SCHMAL R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82